# EUROPEAN PATENT SPECIFICATION

(11) **EP 3 669 265 B1**
(45) Date of publication and mention of the grant of the patent: **11.05.2022**
(21) Application number: 18759630.9
(22) Date of filing: 27.08.2018
(51) Int. Cl.: G06F 9/455, G06F 9/48

(54) **COPYING A SOFTWARE VIRTUALIZATION OBJECT FILE**
KOPIEREN EINER SOFTWAREVIRTUALISIERUNGSOBJEKTDATEI
COPIE D'UN FICHIER D'OBJET DE VIRTUALISATION DE LOGICIEL

(43) Date of publication of application: 24.06.2020
(73) Proprietor: Huawei Technologies Co., Ltd., Guangdong 518129 (CN)
(72) Inventor: KOKKONEN, Jani, 80992 Munich (DE); NIKOLAE, Bogdan, 80992 Munich (DE); JAGADEESH, Pradeep, 80992 Munich (DE)
(74) Representative: Körber, Martin Hans
(86) International application number: PCT/EP2018/072983
(87) International publication number: WO 2020/043265

(56) References cited:
- US-A1- 2016 328 257
- UMESH DESHPANDE ET AL: "Scatter-Gather Live Migration of Virtual Machines", IEEE TRANSACTIONS ON CLOUD COMPUTING, vol. 6, no. 1, 23 September 2015 (2015-09-23), pages 196-208, XP055582583, DOI: 10.1109/TCC.2015.2481424

## Description

### BACKGROUND

The present invention, in some embodiments thereof, relates to a system for copying a software virtualization object file and, more specifically, but not exclusively, to live migration of a software virtualization object file in a system providing a cloud-computing service.

The term "cloud-computing" refers to delivering one or more hosted services, often over the Internet. Some hosted services provide infrastructure. Examples of a hosted service providing infrastructure delivered over the Internet are a compute resource such as a physical machine, a virtual machine or a virtual environment on which an application workload may execute, storage and networking. Cloud-computing helps reducing costs by sharing one or more pools of discrete resources between one or more customers of a cloud-computing service. The one or more customers of the cloud-computing service are typically referred to as "tenants". In some cloud-computing service implementations some resources of the one or more pools of discrete resources are assigned to a tenant for the tenant's exclusive use. In some cloud-computing service implementations the one or more pools of discrete resources are shared by one or more tenants, each running one or more software application workloads, with the cloud-computing service providing isolation between the one or more tenants.

A tenant's application workload may execute in a software virtualization object on a compute resource of the cloud-computing service. Examples of a software virtualization object are a virtual machine and an operating-system-level virtualization software object, known as a container, where an operating system kernel allows the existence of multiple containers for running one or more tenant software applications. The software virtualization object is created by executing a software virtualization object file on the compute resource.

To utilize a plurality of compute resources of a cloud-computing service there may be a need to move a software virtualization object from a source compute resource to a destination compute resource. For example, an amount of virtual machines executed by the plurality of compute resources may change over time, occasionally leading to imbalanced load among the plurality of compute resources. Another example when there may be a need to move a software virtualization object is when there is a need to upgrade a compute resource's hardware component, or there is a need to restart a compute resource. Moving a software virtualization object from the source compute resource to the destination compute resource requires copying the software virtualization object's file (the software virtualization object file) from the source compute resource to the destination compute resource.

A system for copying a software virtualization object file, in which all features of the preamble of claim 1 are disclosed, is described in Umesh Deshpande et al.: "Scatter-Gather Live Migration of Virtual Machines", IEEE Transactions on Cloud Computing, 20150923, Vol:6, Nr:1, Page(s):196 - 208.

US 2016/328257 A1 discloses a method for copying a software virtualization object file from a source processing unit to a destination processing unit, in which the software virtualization object to be copied and/or the destination processing unit is selected so as to maximize the overlap between the memory pages of the software virtualization object file used by the source processing unit and the memory pages of the software virtualization object file already running on the destination processing unit.

### SUMMARY

It is an object of the present invention to provide a system, a method, and a computer program product for copying a software virtualization object file from a source processing unit to a destination processing unit using one or more other possible source processing units.

The invention is set out in the appended set of independent claims 1, 14, and 15. Further implementation forms are apparent from the dependent claims, the description and the figures.

In the following, parts of the description and drawings referring to embodiments, which are not covered by the claims, are not presented as embodiments of the invention, but as examples useful for understanding the invention.

According to a first aspect of the invention, a system for copying a software virtualization object file comprises a management processing unit adapted to: identifying a plurality of source software virtualization object files, each having at least some file pages each identical to one of a plurality of file pages of a software virtualization object file; sending a destination processing unit the plurality of file pages by in each of a plurality of transfer iterations: selecting a file page of the software virtualization object file; identifying in the plurality of source software virtualization object files one or more possible page source files, each comprising the file page; and instructing a source processing unit to send the file page to the destination processing unit; and instructing the destination processing unit to reconstruct the software virtualization object using the plurality of file pages. Sending the plurality of file pages to the destination processing unit from a plurality of source software virtualization object files and not only from the software virtualization object file may facilitate reducing a degradation in availability of a service provided by a software virtualization object executed from the software virtualization object file.

According to a second aspect of the invention, a method for copying a software virtualization object file comprises: identifying a plurality of source software virtualization object files, each having at least some file pages each identical to one of a plurality of file pages of a software virtualization object file; sending a destination processing unit the plurality of file pages by in each of a plurality of transfer iterations: selecting a file page of the software virtualization object file; identifying in the plurality of source software virtualization object files one or more possible page source files, each comprising the file page; and instructing a source processing unit to send the file page to the destination processing unit; and instructing the destination processing unit to reconstruct the software virtualization object using the plurality of file pages.

With reference to the first and second aspects, in a first obligatory implementation of the first and second aspects of the present invention, each of the plurality of source software virtualization object files is accessible by one of a plurality of possible source processing units. The management processing unit is further adapted to: receiving a plurality of messages from the plurality of possible source processing units each comprising a load value, of a resource load metric, of respective possible source processing unit; and in each of the plurality of transfer iterations:
plurality of possible source processing units each comprising a load value, of a resource load metric, of respective possible source processing unit; and in each of the plurality of transfer iterations: identifying a preferred source processing unit having a preferred load value according to a resource load test, and having access to a possible page source file having the file page; and using the preferred source processing unit as the source processing unit. Optionally, the load value is selected from a group of load values consisting of: a central processing unit utilization value, a network bandwidth utilization value, and a network bandwidth value. Selecting the source processing unit according to a load value of a resource load metric may facilitate reducing overall degradation of services provided by the system due to copying the software virtualization object file to the destination processing unit. Optionally, the plurality of possible source processing units comprises an original source processing unit executing the software virtualization object file.

With reference to the first and second aspects, or the first implementation of the first and second aspects, in a second possible implementation of the first and second aspects of the present invention, the management processing unit is further adapted to: computing a plurality of predicted load values by computing a predicted load value for each of the plurality of possible source processing units according to the load value extracted from respective message of the plurality of messages; and updating respective predicted load value of source processing unit after instructing the source processing unit according to a predicted impact of sending the file page to the destination processing unit. Optionally, the management processing unit is further adapted to: in each of a plurality of update iterations: receive a new plurality of messages from the plurality of possible source processing units each comprising a new load value, of the resource load metric; and compute a new plurality of predicted load values by computing a new predicted load value for each of the plurality of possible source processing units according to the new load value extracted from respective message of the new plurality of messages. Computing a load score for each of the plurality of the possible source processing units according to one or more file page transfers assigned to each the possible source processing units may facilitate selection of a source processing unit having least negative impact on availability of one or more services provided by the system. Continuously computing the plurality of load scores according to continuously received resource load values may facilitate using more accurate load scores to select the source processing unit, reducing a negative impact of selecting the source processing unit on availability of the one or more services provided by the system.

With reference to the first and second aspects, or the first or second implementations of the first and second aspects, in a third possible implementation of the first and second aspects of the present invention, the management processing unit instructs the destination processing unit to reconstruct the software virtualization object using the plurality of file pages after the destination processing unit received at least a predefined amount of the plurality of file pages. Optionally, the predefined amount of the plurality of file pages is computed according to a predefined percentage of an amount of the plurality of file pages. Instructing the destination processing unit to reconstruct the software virtualization object before receiving all file pages of the software virtualization object file may facilitate shorter migration time from of the software virtualization object from the original source processing unit to the destination processing unit, which may increase stability of a service provided by the software virtualization object.

With reference to the first and second aspects, or the first, second, or third implementations of the first and second aspects, in a fourth possible implementation of the first and second aspects of the present invention, the management processing unit is further adapted to select the destination processing unit from a plurality of possible destination processing units according to a predefined set of destination processing unit criteria. Selecting the destination processing unit according to a predefined set of destination processing unit criteria may facilitate balanced distribution of load between a plurality of processing units of the system and may facilitate reducing an amount of compute resources used by the system which may reduce cost of operations and maintenance of the system.

With reference to the first and second aspects, or the first, second, third, or fourth implementations of the first and second aspects, in a fifth possible implementation of the first and second aspects of the present invention, the management processing unit is connected to the source processing unit and the destination processing unit via a digital communication network. Optionally, the source processing unit is connected to the destination processing unit via another digital communication network.

With reference to the first and second aspects, or the first, second, third, fourth, or fifth implementations of the first and second aspects, in a sixth possible implementation of the first and second aspects of the present invention, the management processing unit is further adapted to instruct execution of an agent software object on the source processing unit and the destination processing unit for the purpose of communicating with the management processing unit and additionally or alternately for the purpose of copying the software virtualization object file. Using an agent software object may facilitate collection of information required to optimize selection of the destination processing unit and the source processing unit, thus reducing negative impact of copying the software virtualization object file on one or more services provided by the system.

With reference to the first and second aspects, or the first, second, third, fourth, fifth, or sixth implementations of the first and second aspects, in a seventh possible implementation of the first and second aspects of the present invention, the software virtualization object file is an image file of a virtual machine.

With reference to the first and second aspects, or the first, second, third, fourth, fifth, sixth, or seventh implementations of the first and second aspects, in an eighth possible implementation of the first and second aspects of the present invention, the source processing unit and the destination processing unit are connected to a cloud network.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

### BRIEF DESCRIPTION OF THE SEVERAL VIEWS OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:
FIG. 1 is a schematic block diagram of an exemplary system, according to some embodiments of the present invention;
FIG. 2 is a flowchart schematically representing an optional flow of operations for copying a software virtualization object file, according to some embodiments of the present invention;
FIG. 3 is a flowchart schematically representing another optional flow of operations for copying a software virtualization object file, according to some embodiments of the present invention;
FIG. 4 is a flowchart schematically representing an optional flow of operations for computing a plurality of load values, according to some embodiments of the present invention; and
FIG. 5 is a flowchart schematically representing an optional flow of operations for updating a plurality of load values, according to some embodiments of the present invention.

### DETAILED DESCRIPTION

The present invention, in some embodiments thereof, relates to a system for copying a software virtualization object file and, more specifically, but not exclusively, to live migration of a software virtualization object file in a system providing a cloud-computing service.

The following description focuses on copying a software virtualization object which is a virtual machine; however the present invention is not limited to virtual machines and may be used for copying any software virtualization object file.

Some methods for moving a virtual machine (VM) from a source compute resource to a destination compute resource require stopping execution of the VM on the source compute resource, storing the VM's last state in the VM's file, copying the VM's file to the destination compute resource and executing a new VM on the destination compute resource from the copied VM file. Such methods may interrupt a service provided by the VM due to stopping the VM prior to copying. Live migration methods for moving a VM allow copying the VM's file without stopping the VM on the source compute resource until the destination compute resource has a sufficient copy of the VM file to provide the service. Live migration techniques allow reducing an amount of time a service provided by the VM is disrupted compared to when the VM is stopped prior to copying.

However, in modern clouds VM files tend to grow to large sizes, requiring long data transfer time and high network bandwidth utilization on the source compute resource. Reducing network bandwidth utilization increases migration time which is undesirable. Shorter migration time is preferred so the source compute resource may be reclaimed as fast as possible. Using the source compute resource's network bandwidth for migration may lead to performance degradation of the VM executed by the source compute resource, as well as degradation in performance of other VMs executed by the source compute resource.

In addition, as the VM still executes on the source compute resource while the VM file is copied there may be a need to synchronize the VM's state with changes that occurred while the VM file is copied.

A VM file typically comprises a plurality of file pages. In some systems a size of a file page corresponds with a size of an area of storage on a non-volatile digital storage, for example a hard disk. Copying a VM file comprises a plurality of copy operations, each copying one or more of the plurality of file pages. Some existing techniques for live migration rely on copying some file pages more than once. These existing techniques may increase required network bandwidth for copying the VM file, and under some system conditions may fail to converge and complete moving the VM. Some other existing techniques for live migration rely on transferring control to the new VM on executing on the destination compute resource prior to copying all of the plurality of file pages. These existing techniques may cause degradation of the service provided by the VM due to access penalties incurred due to missing pages on the destination compute resource.

Some virtual software objects exhibit a large degree of similarity, in that some file pages of a first virtual software object file are identical some other file pages of a second virtual software object file. For example, each of one or more VM files based on a common base image may comprise a plurality of common file pages. When copying one of the one or more VM files to the destination compute resource, the plurality of common file pages may be copied from any one of the one or more VM files, reducing network bandwidth load of the source compute resource. In addition, as a VM executing on a compute resource may exhibit fluctuations in activity, interleaving a plurality of active periods with a plurality of inactive periods, copying the plurality of common file pages from an inactive VM further reduces degradation of the VM's performance.

The present invention, in some embodiments thereof, proposes copying a software virtualization object file from a source compute resource to a destination compute resource by copying some of the software virtualization object file's file pages from a plurality of other virtualization object files. Optionally, the source compute resource is a source processing unit and the destination compute resource is a destination processing unit. A processing unit may comprise a plurality of hardware processors. Optionally, the other virtualization object files are executed by one or more other processing units. Copying some of the file pages from the plurality of other virtualization object files may reduce network bandwidth of the source processing unit used for copying the software virtualization object file, thus reducing degradation of performance of one or more software virtualization objects executing on the source processing unit, which in turn may increase stability and reliability of one or more services provided by the one or more software virtualization objects. In addition, copying some of the file pages from the plurality of other virtualization object files may reduce migration time of the software virtualization object from the source processing unit to the destination processing unit, increasing robustness of the cloud-computing system, and may facilitate reducing cost of maintenance of the cloud computing system.

In some embodiments of the present invention, a management processing unit instructs the one or more other processing units to send some of the file pages to the destination processing unit. Optionally, the management processing unit identifies an alternative source processing unit in the one or more other processing units according to the alternative source processing unit's load, and instructs the alternative source processing unit to send a page file to the destination processing unit. Selecting an alternative source processing unit to send the page file to the destination processing unit according to load may facilitate reducing performance degradation of one or more services provided by the one or more other processing units. In addition, the management unit may instruct the source processing unit to send the file page to the destination processing unit.

In addition, in some embodiments of the present invention the management processing unit instructs execution of an agent software object on one or more processing units selected from a group comprising the source processing unit, the destination processing unit, and the one or more other processing units, for the purpose of communicating with the management processing unit and additionally or alternately for the purpose of copying the software virtualization object file. Thus, the alternative source processing unit may execute the agent software object. For example, the agent software object executed by the alternative source processing unit may be used to send the management processing unit a load value of a resource load metric which the management processing unit may use to identify the alternative source processing unit.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

The present invention may be a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing.

Computer readable program instructions described herein can be downloaded to respective computing/processing devices from a computer readable storage medium or to an external computer or external storage device via a network, for example, the Internet, a local area network, a wide area network and/or a wireless network.

The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

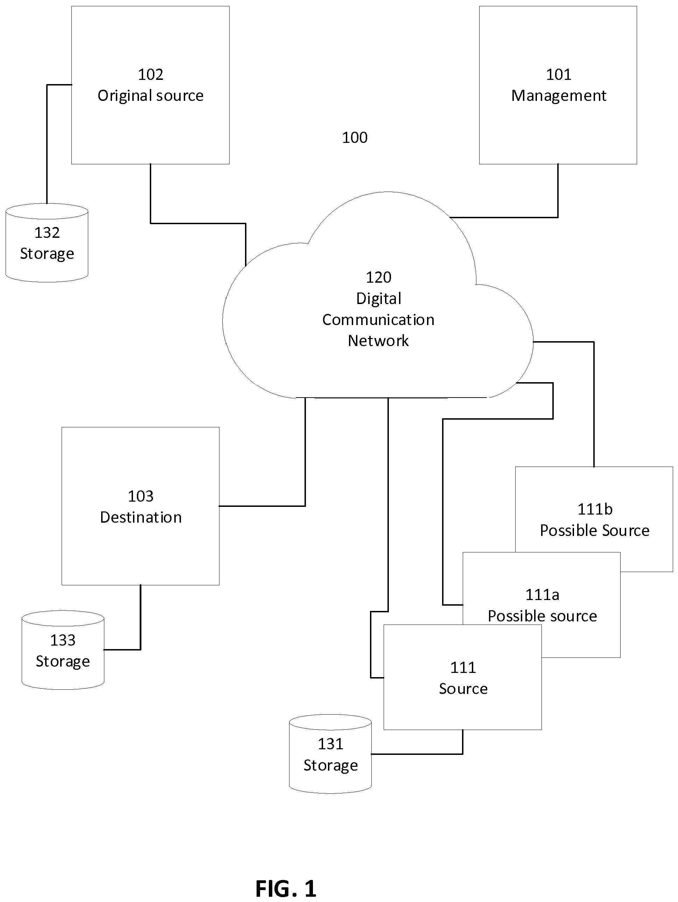

Reference is now made to FIG. 1, showing a schematic block diagram of an exemplary system 100, according to some embodiments of the present invention. In such embodiments, management processing unit 101 is connected to digital communication network 120. Optionally, digital communication network 120 is a local area network, for example an Ethernet network. Optionally, digital communication network 120 is a wide area network, for example the Internet. Optionally, digital communication network 120 is a cloud network, i.e. a computer network that exists within or is part of a cloud-computing infrastructure. Optionally, original source processing unit 102 is connected to management processing unit 101 via digital communication network 120. Optionally, original source processing unit 102 executes a software virtualization object. Optionally, the software virtualization object is executed from a software virtualization object file, optionally stored on at least one non-volatile digital storage 132 connected to original source processing unit 102. Examples of a non-volatile digital storage are a hard disk drive, a network-attached storage and a digital storage network connected to original source processing unit 102 via digital communication network 120 or a second digital communication network. Optionally, the second digital communication network is a local area network, for example an Ethernet network. Optionally, the second digital communication network is a wide area network, for example the Internet.

Optionally, a plurality of possible destination processing units is connected to management processing unit 101 via digital communication network 120. Optionally, the plurality of possible destination processing units comprises destination processing unit 103. Management processing unit 101 may identify destination processing unit 103 as a destination for copying the software virtualization object file to. Optionally, the copied software virtualization object file is stored on at least one non-volatile digital storage 133. At least one non-volatile digital storage 133 may be a hard disk drive connected to destination processing unit 103. Optionally, at least one non-volatile digital storage 133 is a network-attached storage or a storage network.

Optionally, a plurality of cloud processing units is connected to management processing unit via digital communication network 120. Optionally, the plurality of cloud processing units comprises a plurality of possible source processing units, each executing a source software virtualization object file having at least some file pages each identical to one of a plurality of file pages of the software virtualization object file on original source processing unit 102. Optionally, two file pages are considered identical when a first digital signature value computed for a first of the two file pages is equal to a second digital signature value computed for a second of the two file pages. 111a and 111b are some possible source processing units of the plurality of possible source processing units. Optionally, the plurality of possible source processing units comprises source processing unit 111, executing a source software virtualization object from a source software virtualization object file having at least some file pages each identical to one of a plurality of file pages of the software virtualization object file on original source processing unit 102. Optionally, source processing unit 111 stores the software virtualization object file on at least one non-volatile storage 131. At least one non-volatile digital storage 131 may be a hard disk drive connected to source processing unit 101. Optionally, at least one non-volatile digital storage 131 is a network-attached storage or a storage network. Management processing unit 101 may instruct source processing unit 111 to send a page file to destination processing unit 103.

Optionally, original source processing unit 102 and additionally or alternately source processing unit 111 are connected to destination processing unit 103 via a third digital communication network. Optionally, the third digital communication network is a local area network, for example an Ethernet network. Optionally, the third digital communication network is a wide area network, for example the Internet. Optionally, the third digital communication network is a cloud network.

In some embodiments, management processing unit 101 instructs execution of an agent software object on each of the plurality of cloud processing units, including the plurality of possible source processing units, source processing unit 111, and original source processing unit 102, and on destination processing unit 103, for the purpose of communication with management processing unit 101 and additionally or alternately for the purpose of copying the software virtualization object file to destination processing unit 103.

To copy the software virtualization object file, in some embodiments of the present invention system 100 implements the following optional method.

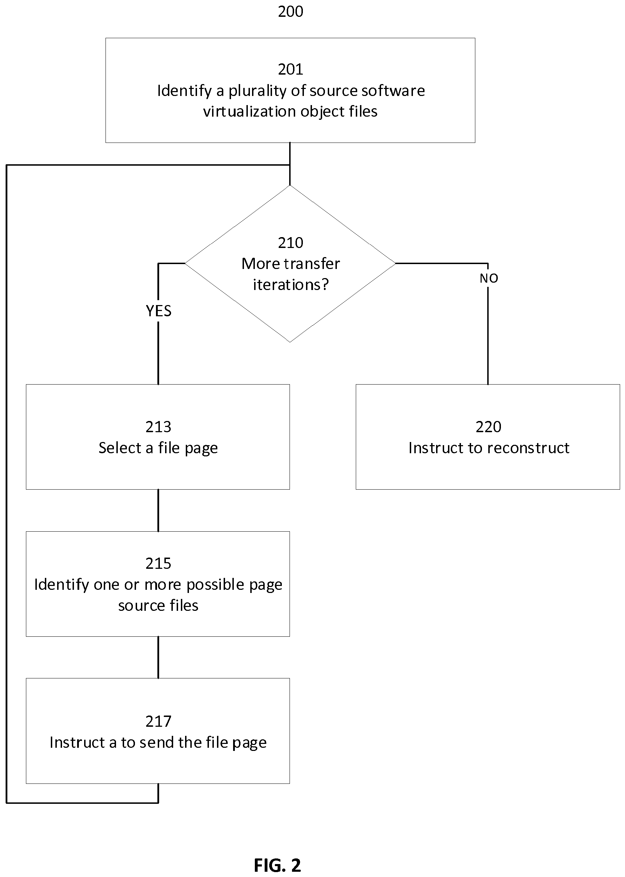

Reference is now made also to FIG. 2, showing a flowchart schematically representing an optional flow of operations 200 for copying a software virtualization object file, according to some embodiments of the present invention. In such embodiments management processing unit 101 identifies in 201 a plurality of source software virtualization object files, each having at least some file pages each identical to one of a plurality of file pages of the software virtualization object file. Optionally, the software virtualization object file is an image file of a software virtualization object executed by original source processing unit 102. Optionally, the software virtualization object file is an image file of a virtual machine. Optionally, management processing unit 101 executes a plurality of transfer iterations to send the plurality of file pages to destination processing unit 103. In each of the plurality of transfer iterations, management processing unit 101 optionally selects in 213 a file page of the software virtualization object file and in 215 management processing unit 101 optionally identifies in the plurality of source software virtualization object files one or more possible page source files, each comprising the file page. Optionally, each of the plurality of source software virtualization object files is accessible by one of the plurality of possible source processing units 111, 111a and 111b. Optionally, the plurality of possible source processing units comprises original source processing unit 102. In 217, management processing unit 101 optionally instructs source processing unit 111 to send the file page to destination processing unit 103. Optionally, management processing unit 101 identifies in 210 that there are no more transfer iterations. In 220, management processing unit 101 optionally instructs destination processing unit 103 to reconstruct the software virtualization object using the plurality of file pages. Optionally, reconstructing the software virtualization object comprises executing a copied software virtualization object comprising the plurality of file pages. Optionally, management processing unit 101 instructs destination processing unit 102 to reconstruct the software virtualization object using the plurality of file pages after destination processing unit 102 received at least a predefined amount of the plurality of file pages. Optionally, the predefined amount of the plurality of file pages is computed according to a predefined percentage of an amount of the plurality of file pages. For example, the predefine percentage may be 70% or 90%. Optionally, management processing unit 101 instructs destination processing unit 102 to reconstruct the software virtualization object using the plurality of file pages after destination processing unit 102 received a predefined plurality of essential file pages. For example, the predefined plurality of essential file pages may comprise an operating system's kernel.

Optionally, the plurality of cloud processing units comprises a plurality of possible destination processing units. Optionally, management processing unit 101 selects destination processing unit 102 from the plurality of possible destination processing units, optionally according to a predefined set of destination processing unit criteria. Some examples of destination processing unit criteria are: available processing capacity, current processing load, available network bandwidth, and available non-volatile digital storage.

In some embodiments of the present invention, management processing unit 101 identifies source processing unit 102 from the plurality of possible source processing units. In such embodiments, system 100 may implement the following optional method.

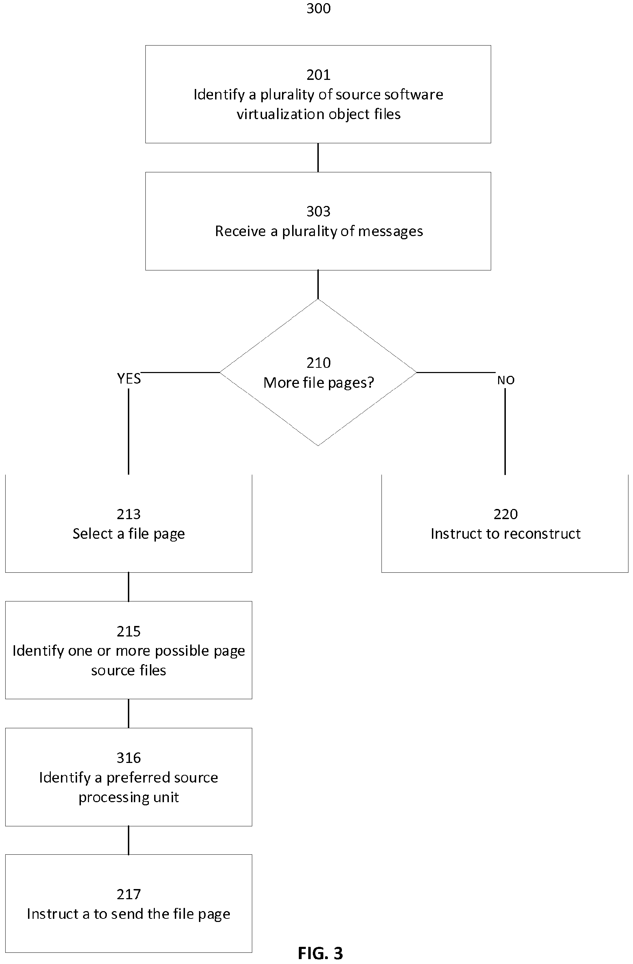

Reference is now made also to FIG. 3, showing a flowchart schematically representing another optional flow of operations 300 for copying a software virtualization object file, according to some embodiments of the present invention. In such embodiments, management processing unit 101 receives in 303 a plurality of messages from the plurality of possible source processing units, each comprising a load value, of a resource load metric, of respective possible source processing unit. Some examples of a load value are: a central processing unit utilization value, a network bandwidth utilization value, and a network bandwidth value. Optionally, each of the plurality of messages comprises additional information, for example a list of file page signatures, computed for a plurality of available file pages. Optionally, management processing unit 101 receives the plurality of messages from the plurality of cloud processing units.

Optionally, in each of the plurality of transfer iterations, management processing unit 101, after selecting a file page in 213, optionally identifies in 316 a preferred source processing unit, in the plurality of possible source processing units, having a preferred load value according to a resource load test. An example of a resource load test is comparing a processor utilization value to a threshold processor utilization value. Another example of a resource load test is comparing a load score to an identified minimal load score. Optionally, management processing unit 101 uses the preferred source processing unit as the source processing unit in 217 and instructs the preferred source processing unit to send the file page to destination processing unit 103.

Optionally, management processing unit 101 computes a load score for each of the plurality of possible source processing units, to use in 316 to identify the preferred source processing unit. Optionally, the load score is a predicted load value. To compute the load score for each of the plurality of possible source processing units, system 100 optionally implements the following optional method.

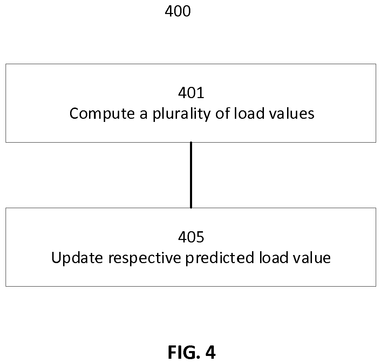

Reference is now made also to FIG. 4, showing a flowchart schematically representing an optional flow of operations 400 for computing a plurality of load values, according to some embodiments of the present invention. In such embodiments, management processing unit 101 computes in 401 a plurality of predicted load values, by computing a predicted load value for each of the plurality of possible source processing units, according to the load value extracted from respective message of the plurality of messages received in 303. Optionally, management processing unit 101 computes a predicted load value for each of the plurality of cloud processing units. In 405, management processing unit 101 optionally updates respective predicted load value of source processing unit 111 after instructing in 217 source processing unit 111 to send the page file to destination processing unit 103. Optionally, management processing unit 101 updates respective predicted load value of source processing unit 111 according to a predicted impact of sending the file page to destination processing unit 103.

In some embodiments of the present invention, management processing unit 101 continuously monitors the plurality of possible source processing units and continuously updates the plurality of predicted load values. To do so, system 100 optionally implements the following optional method.

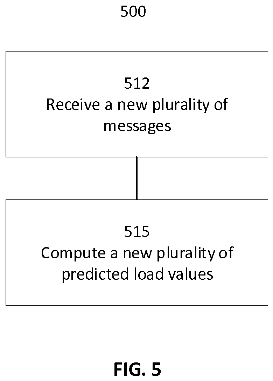

Reference is now made also to FIG. 5, showing a flowchart schematically representing an optional flow of operations 500 for updating a plurality of load values, according to some embodiments of the present invention. In such embodiments, in each of a plurality of update iterations, management processing unit 101 receives in 512 a new plurality of messages from the plurality of possible source processing units, each message comprising a new load value of the resource load metric. Optionally, management processing unit 101 receives the new plurality of messages from the plurality of cloud processing units. In 515, management processing unit 101 optionally computes a new plurality of predicted load values by computing a new predicted load value for each of the plurality of possible source processing units, optionally according to the new load value extracted from respective message of the new plurality of messages. Optionally, management processing unit 101 computes a new predicted load value for each of the plurality of cloud processing units.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope of the described embodiments. The terminology used herein was chosen to best explain the principles of the embodiments, the practical application or technical improvement over technologies found in the marketplace, or to enable others of ordinary skill in the art to understand the embodiments disclosed herein.

As used herein the term "about" refers to ± 10 %.

The terms "comprises", "comprising", "includes", "including", "having" and their conjugates mean "including but not limited to". This term encompasses the terms "consisting of" and "consisting essentially of".

The phrase "consisting essentially of" means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the invention may include a plurality of "optional" features unless such features conflict.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

In addition, citation or identification of any reference in this application shall not be construed as an admission that such reference is available as prior art to the present invention. To the extent that section headings are used, they should not be construed as necessarily limiting.

## Claims

1. A system for copying a software virtualization object file, comprising
a management processing unit (101) adapted to send, to a destination processing unit (103), a plurality of file pages of the software virtualization object file by executing a plurality of transfer iterations and to instruct the destination processing unit (103) to reconstruct the software virtualization object using the plurality of file pages; wherein
in each of the plurality of transfer iterations, the management processing unit (101) is adapted to select a file page of the software virtualization object file, to identify, in a source software virtualization object file accessible by a source processing units (111), a possible page source file comprising a file page identical to the selected file page and to instruct the source processing unit (111) to send the identical file page to the destination processing unit (103),
wherein
the management processing unit (101) is adapted to identify (201) a plurality of source software virtualization object files, each having at least some file pages each identical to one of a plurality of file pages of the software virtualization object file, **characterized in that**
each of the plurality of source software virtualization object files is accessible by one of a plurality of possible source processing units (111, 111a, 111b); and
the management processing unit (101) is further adapted to receive (303) a plurality of messages from the plurality of possible source processing units (111, 111a, 111b) each comprising a load value of a resource load metric of respective possible source processing unit (111, 111a, 111b), to identify (316), in each of the plurality of transfer iterations, a preferred source processing unit (111, 111a, 111b) having a preferred load value according to a resource load test, and having access to a possible page source file comprising a file page identical to the file page and to instruct, in each of the plurality of transfer iterations, the preferred source processing unit (111, 111a, 111b) as the source processing unit (111) to send the identical file page to the destination processing unit (103).

2. The system of claim 1, wherein
the plurality of possible source processing units (111, 111a, 111b) comprises an original source processing unit executing the software virtualization object file.

3. The system of any one of claims 1 and 2, wherein
the load value is selected from a group of load values consisting of: a central processing unit utilization value, a network bandwidth utilization value, and a network bandwidth value.

4. The system of any one of claims 1 to 3, wherein the management processing unit (101) is further adapted to:
compute a plurality of predicted load values by computing a predicted load value for each of the plurality of possible source processing units (111, 111a, 111b) according to the load value extracted from respective message of the plurality of messages; and
update respective predicted load value of source processing unit after instructing the source processing unit (111) according to a predicted impact of sending the file page to the destination processing unit (103).

5. The system of claim 4, wherein
the management processing unit (101) is further adapted to receive, in each of a plurality of update iterations, a new plurality of messages from the plurality of possible source processing units (111, 111a, 111b) each comprising a new load value of the resource load metric; and compute, in each of the plurality of update iterations, a new plurality of predicted load values by computing a new predicted load value for each of the plurality of possible source processing units (111, 111a, 111b) according to the new load value extracted from respective message of the new plurality of messages.

6. The system of any one of the previous claims, wherein
the management processing unit (101) is adapted to instruct the destination processing unit (103) to reconstruct the software virtualization object using the plurality of file pages after the destination processing unit (103) received at least a predefined amount of the plurality of file pages.

7. The system of claim 6, wherein
the predefined amount of the plurality of file pages is computed according to a predefined percentage of an amount of the plurality of file pages.

8. The system of any one of the previous claims, wherein
the management processing unit (101) is further adapted to select the destination processing unit (103) from a plurality of possible destination processing units according to a predefined set of destination processing unit criteria.

9. The system of any one of the previous claims, wherein
the management processing unit (101) is connected to the source processing unit (102) and the destination processing unit (103) via a digital communication network (120).

10. The system of any one of the previous claims, wherein
the source processing unit (102) is connected to the destination processing unit (103) via another digital communication network.

11. The system of any one of the previous claims wherein
the management processing unit (101) is further adapted to instruct execution of an agent software object on the source processing unit (102) and the destination processing unit (103) for the purpose of communicating with the management processing unit (101) and additionally or alternately for the purpose of copying the software virtualization object file.

12. The system of any one of the previous claims wherein
the software virtualization object file is an image file of a virtual machine.

13. The system of any one of the previous claims wherein
the source processing unit (102) and the destination processing unit (103) are connected to a cloud network.

14. A method for copying a software virtualization object file, comprising the steps of:
sending, to a destination processing unit (103), a plurality of file pages of the software virtualization object file by executing a plurality of transfer iterations; and
instructing (220) the destination processing unit (103) to reconstruct the software virtualization object using the plurality of file pages; wherein
in each of the plurality of transfer iterations, a file page of the software virtualization object file is selected (213), a possible page source file comprising a file page identical to the selected file page is identified (215) in a source software virtualization object file accessible by a source processing unit (111) and the source processing unit (111) is instructed (217) to send the identical file page to the destination processing unit (103),
comprising identifying (201) a plurality of source software virtualization object files, each having at least some file pages each identical to one of a plurality of file pages of the software virtualization object file, **characterized in**
**that** each of the plurality of source software virtualization object files is accessible by one of a plurality of possible source processing units (111, 111a, 111b);
receiving (303) a plurality of messages from the plurality of possible source processing units (111, 111a, 111b) each comprising a load value, of a resource load metric, of respective possible source processing unit (111, 111a, 111b); and
identifying (316), in each of the plurality of transfer iterations, a preferred source processing unit (111, 111a, 111b) having a preferred load value according to a resource load test, and having access to a possible page source file comprising a file page identical to the file page; wherein
in the instructing step (217), the preferred source processing unit (111, 111a, 111b) as the source processing unit (111) is instructed to send the identical file page to the destination processing unit (103).

15. A computer program product, including a computer readable storage medium having computer readable program instructions thereon for causing a processor to carry out the method according to claim 14.

## Patentansprüche

1. System zum Kopieren einer Software-Virtualisierungsobjektdatei, das eine Verwaltungsverarbeitungseinheit (101) umfasst, die so eingerichtet ist, dass sie eine Vielzahl von Dateiseiten der Software-Virtualisierungsobjektdatei durch Ausführen einer Vielzahl von Übertragungsiterationen an eine Zielverarbeitungseinheit (103) sendet und die Zielverarbeitungseinheit (103) anweist, das Software-Virtualisierungsobjekt unter Verwendung der Vielzahl von Dateiseiten zu rekonstruieren;
wobei in jeder der Vielzahl von Übertragungsiterationen die Verwaltungsverarbeitungseinheit (101) so angepasst ist, dass sie eine Dateiseite der Software-Virtualisierungsobjektdatei auswählt, um in einer Quellensoftware-Virtualisierungsobjektdatei, auf die eine Quellenverarbeitungseinheit (111) zugreifen kann, eine mögliche Seitenquelldatei zu identifizieren, die eine mit der ausgewählten Dateiseite identische Dateiseite umfasst, und um die Quellenverarbeitungseinheit (111) anzuweisen, die identische Dateiseite an die Zielverarbeitungseinheit (103) zu senden,
wobei die Verwaltungsverarbeitungseinheit (101) dazu ausgebildet ist, eine Vielzahl von Quellensoftware-Virtualisierungsobjektdateien zu identifizieren (201), die jeweils mindestens einige Dateiseiten aufweisen, die jeweils mit einer aus einer Vielzahl von Dateiseiten der Software-Virtualisierungsobjektdatei identisch sind, **dadurch gekennzeichnet, dass** auf jede der Vielzahl von Quellensoftware-Virtualisierungsobjektdateien durch eine aus einer Vielzahl von möglichen Quellenverarbeitungseinheiten (111, lila, 111b) zugegriffen werden kann; und
die Verwaltungsverarbeitungseinheit (101) ferner dazu ausgebildet ist, eine Vielzahl von Nachrichten von der Vielzahl möglicher Quellenverarbeitungseinheiten (111, 111a, 111b) zu empfangen (303), die jeweils einen Lastwert einer Ressourcenlastmetrik der jeweiligen möglichen Quellenverarbeitungseinheit (111, 111a, 111b) umfassen, um in jeder der Vielzahl von Übertragungsiterationen eine bevorzugte Quellenverarbeitungseinheit (111, 111a, 111b) zu identifizieren (316), die gemäß einem Ressourcenlasttest einen bevorzugten Lastwert aufweist und Zugriff auf eine mögliche Seitenquelldatei hat, die eine mit der Dateiseite identische Dateiseite umfasst, und in jeder der Vielzahl von Übertragungsiterationen die bevorzugte Quellenverarbeitungseinheit (111, 111a, 111b) als die Quellenverarbeitungseinheit (111) anzuweisen, die identische Dateiseite an die Zielverarbeitungseinheit (103) zu senden.

2. System nach Anspruch 1, wobei die Vielzahl möglicher Quellenverarbeitungseinheiten (111, 111a, 111b) eine ursprüngliche Quellenverarbeitungseinheit umfasst, die die Software-Virtualisierungsobjektdatei ausführt.

3. System nach einem der Ansprüche 1 und 2, wobei der Lastwert aus einer Gruppe von Lastwerten ausgewählt wird, die aus Folgendem besteht:
einem Zentraleinheits-Nutzungswert, einem Netzwerkbandbreiten-Nutzungswert und einem Netzwerkbandbreitenwert.

4. System nach einem der Ansprüche 1 bis 3, wobei die Verwaltungsverarbeitungseinheit (101) ferner für Folgendes ausgebildet ist:
Berechnen einer Vielzahl von vorhergesagten Lastwerten durch Berechnen eines vorhergesagten Lastwertes für jede der Vielzahl von möglichen Quellenverarbeitungseinheiten (111, 111a, 111b) gemäß dem Lastwert, der aus der jeweiligen Nachricht der Vielzahl von Nachrichten extrahiert wurde; und
Aktualisieren des jeweiligen vorausgesagten Lastwertes der Quellenverarbeitungseinheit nach Anweisung der Quellenverarbeitungseinheit (111) entsprechend einer vorausgesagten Auswirkung des Sendens der Dateiseite an die Zielverarbeitungseinheit (103).

5. System nach Anspruch 4, wobei
die Verwaltungsverarbeitungseinheit (101) ferner dazu ausgebildet ist, in jeder einer Vielzahl von Aktualisierungsiterationen eine neue Vielzahl von Nachrichten von der Vielzahl möglicher Quellenverarbeitungseinheiten (111, lila, 111b) zu empfangen, die jeweils einen neuen Lastwert der Ressourcenlastmetrik umfassen; und in jeder der Vielzahl von Aktualisierungsiterationen, eine neue Vielzahl von vorhergesagten Lastwerten durch Berechnen eines neuen vorhergesagten Lastwertes für jede der Vielzahl von möglichen Quellenverarbeitungseinheiten (111, lila, 111b) gemäß dem neuen Lastwert zu berechnen, der aus der jeweiligen Nachricht der neuen Vielzahl von Nachrichten extrahiert wurde.

6. System nach einem der vorhergehenden Ansprüche, wobei die Verwaltungsverarbeitungseinheit (101) dazu ausgebildet ist, die Zielverarbeitungseinheit (103) anzuweisen, das Software-Virtualisierungsobjekt unter Verwendung der Vielzahl von Dateiseiten zu rekonstruieren, nachdem die Zielverarbeitungseinheit (103) mindestens eine vordefinierte Menge der Vielzahl von Dateiseiten empfangen hat.

7. System nach Anspruch 6, wobei
die vordefinierte Menge der Vielzahl von Dateiseiten entsprechend einem vordefinierten Prozentsatz einer Menge der Vielzahl von Dateiseiten berechnet wird.

8. System nach einem der vorhergehenden Ansprüche, wobei
die Verwaltungsverarbeitungseinheit (101) ferner dazu ausgebildet ist, die Zielverarbeitungseinheit (103) aus einer Vielzahl möglicher Zielverarbeitungseinheiten gemäß einem vordefinierten Satz von Zielverarbeitungseinheitskriterien auszuwählen.

9. System nach einem der vorhergehenden Ansprüche, wobei
die Verwaltungsverarbeitungseinheit (101) mit der Quellenverarbeitungseinheit (102) und der Zielverarbeitungseinheit (103) über ein digitales Kommunikationsnetz (120) verbunden ist.

10. System nach einem der vorhergehenden Ansprüche, wobei
die Quellenverarbeitungseinheit (102) über ein anderes digitales Kommunikationsnetz mit der Zielverarbeitungseinheit (103) verbunden ist.

11. System nach einem der vorhergehenden Ansprüche, wobei
die Verwaltungsverarbeitungseinheit (101) ferner dazu ausgebildet ist, die Ausführung eines Agentensoftwareobjekts auf der Quellenverarbeitungseinheit (102) und der Zielverarbeitungseinheit (103) anzuweisen, um mit der Verwaltungsverarbeitungseinheit (101) zu kommunizieren und zusätzlich oder alternativ die Software-Virtualisierungsobjektdatei zu kopieren.

12. System nach einem der vorhergehenden Ansprüche, wobei
die Software-Virtualisierungsobjektdatei eine Bilddatei einer virtuellen Maschine ist.

13. System nach einem der vorhergehenden Ansprüche, wobei
die Quellenverarbeitungseinheit (102) und die Zielverarbeitungseinheit (103) mit einem Cloud-Netzwerk verbunden sind.

14. Verfahren zum Kopieren einer Software-Virtualisierungsobjektdatei, das die folgenden Schritte umfasst:
Senden, zu einer Zielverarbeitungseinheit (103), einer Vielzahl von Dateiseiten der Software-Virtualisierungsobjektdatei durch Ausführen einer Vielzahl von Übertragungsiterationen; und
Anweisen (220) der Zielverarbeitungseinheit (103), das Software-Virtualisierungsobjekt unter Verwendung der Vielzahl von Dateiseiten zu rekonstruieren;
wobei in jeder der Vielzahl von Übertragungsiterationen eine Dateiseite der Software-Virtualisierungsobjektdatei ausgewählt wird (213), eine mögliche Seitenquelldatei, die eine mit der ausgewählten Dateiseite identische Dateiseite umfasst, in einer Quellensoftware-Virtualisierungsobjektdatei identifiziert wird (215), auf die eine Quellenverarbeitungseinheit (111) zugreifen kann, und die Quellenverarbeitungseinheit (111) angewiesen wird (217), die identische Dateiseite an die Zielverarbeitungseinheit (103) zu senden, Folgendes umfassend:
Identifizieren (201) einer Vielzahl von Quellensoftware-Virtualisierungsobjektdateien, die jeweils mindestens einige Dateiseiten aufweisen, die jeweils mit einer aus einer Vielzahl von Dateiseiten der Software-Virtualisierungsobjektdatei identisch sind,
**dadurch gekennzeichnet, dass** auf jede der Vielzahl von Quellensoftware-Virtualisierungsobjektdateien durch eine aus einer Vielzahl von möglichen Quellenverarbeitungseinheiten (111, lila, 111b) zugegriffen werden kann;
Empfangen (303) einer Vielzahl von Nachrichten von der Vielzahl möglicher Quellenverarbeitungseinheiten (111, 111a, 111b), die jeweils einen Lastwert einer Ressourcenlastmetrik der jeweiligen möglichen Quellenverarbeitungseinheit (111, lila, 111b) umfassen; und
Identifizieren (316), in jeder der Vielzahl von Übertragungsiterationen, einer bevorzugten Quellenverarbeitungseinheit (111, lila, 111b) mit einem bevorzugten Lastwert gemäß einem Ressourcenlasttest und mit Zugriff auf eine mögliche Seitenquelldatei, die eine mit der Dateiseite identische Dateiseite umfasst;
wobei in dem Anweisungsschritt (217) die bevorzugte Quellenverarbeitungseinheit (111, 111a, 111b) als die Quellenverarbeitungseinheit (111) angewiesen wird, die identische Dateiseite an die Zielverarbeitungseinheit (103) zu senden.

15. Computerprogrammprodukt, das ein computerlesbares Speichermedium mit computerlesbaren Programmanweisungen darauf enthält, um einen Prozessor zu veranlassen, das Verfahren gemäß Anspruch 14 auszuführen.

## Revendications

1. Système de copie d'un fichier d'objet logiciel de virtualisation, comprenant :
une unité de traitement de gestion (101) conçue pour envoyer, à une unité de traitement de destination (103), une pluralité de pages de fichier du fichier d'objet logiciel de virtualisation en exécutant une pluralité d'itérations de transfert, et pour donner l'instruction à l'unité de traitement de destination (103) de reconstruire l'objet logiciel de virtualisation au moyen de la pluralité de pages de fichier ;
dans chaque itération de transfert de la pluralité d'itérations de transfert, l'unité de traitement de gestion (101) étant conçue pour sélectionner une page de fichier du fichier d'objet logiciel de virtualisation, pour identifier, dans un fichier source d'objet logiciel de virtualisation accessible par une unité de traitement source (111), un possible fichier source de page comprenant une page de fichier identique à la page de fichier sélectionnée, et pour donner l'instruction à l'unité de traitement source (111) d'envoyer la page de fichier identique à l'unité de traitement de destination (103),
l'unité de traitement de gestion (101) étant conçue pour identifier (201) une pluralité de fichiers sources d'objet logiciel de virtualisation ayant chacun au moins certaines pages de fichier identiques chacune à une page de fichier d'une pluralité de pages de fichier du fichier d'objet logiciel de virtualisation,
le système étant **caractérisé en ce que** chaque fichier source d'objet logiciel de virtualisation de la pluralité de fichiers sources d'objet logiciel de virtualisation est accessible par une possible unité de traitement source d'une pluralité de possibles unités de traitement sources (111, 111a, 111b) ; et
l'unité de traitement de gestion (101) étant en outre conçue pour recevoir (303), en provenance de la pluralité de possibles unités de traitement sources (111, 111a, 111b), une pluralité de messages comprenant chacun une valeur de charge d'un indicateur métrique de charge de ressource d'une possible unité de traitement source (111, 111a, 111b) respective, pour identifier (316), dans chaque itération de transfert de la pluralité d'itérations de transfert, une unité de traitement source (111, 111a, 111b) préférée ayant une valeur de charge préférée selon un test de charge de ressource et ayant accès à un possible fichier source de page comprenant une page de fichier identique à la page de fichier, et pour donner l'instruction, dans chaque itération de transfert de la pluralité d'itérations de transfert, à l'unité de traitement source (111, 111a, 111b) préférée en guise d'unité de traitement source (111) d'envoyer la page de fichier identique à l'unité de traitement de destination (103).

2. Système selon la revendication 1, dans lequel :
la pluralité de possibles unités de traitement sources (111, 111a, 111b) comprend une unité de traitement source d'origine exécutant le fichier d'objet logiciel de virtualisation.

3. Système selon l'une quelconque des revendications 1 et 2, dans lequel :
la valeur de charge est sélectionnée dans un groupe de valeurs de charge consistant en : une valeur d'utilisation d'unité centrale de traitement, une valeur d'utilisation de bande passante de réseau et une valeur de bande passante de réseau.

4. Système selon l'une quelconque des revendications 1 à 3, dans lequel l'unité de traitement de gestion (101) est en outre conçue pour :
calculer une pluralité de valeurs de charge prédites en calculant une valeur de charge prédite pour chaque possible unité de traitement source de la pluralité de possibles unités de traitement sources (111, 111a, 111b) selon la valeur de charge extraite d'un message respectif de la pluralité de messages ; et
mettre à jour une valeur de charge prédite respective d'une unité de traitement source après avoir donné une instruction à l'unité de traitement source (111) selon un impact prédit d'un envoi de la page de fichier à l'unité de traitement de destination (103).

5. Système selon la revendication 4, dans lequel :
l'unité de traitement de gestion (101) est en outre conçue pour recevoir, dans chaque itération de mise à jour de la pluralité d'itérations de mise à jour, en provenance de la pluralité de possibles unités de traitement sources (111, 111a, 111b), une nouvelle pluralité de messages comprenant chacun une nouvelle valeur de charge de l'indicateur métrique de charge de ressource ; et calculer, dans chaque itération de mise à jour de la pluralité d'itérations de mise à jour, une nouvelle pluralité de valeurs de charge prédites en calculant une nouvelle valeur de charge prédite pour chaque possible unité de traitement source de la pluralité de possibles unités de traitement sources (111, 111a, 111b) selon la nouvelle valeur de charge extraite d'un message respectif de la nouvelle pluralité de messages.

6. Système selon l'une quelconque des revendications précédentes, dans lequel :
l'unité de traitement de gestion (101) est conçue pour donner l'instruction à l'unité de traitement de destination (103) de reconstruire l'objet logiciel de virtualisation au moyen de la pluralité de pages de fichier après la réception, par l'unité de traitement
de destination (103), d'au moins une quantité prédéfinie de pages de fichier de la pluralité de pages de fichier.

7. Système selon la revendication 6, dans lequel :
la quantité prédéfinie de pages de fichier de la pluralité de pages de fichier est calculée selon un pourcentage prédéfini d'une quantité de pages de fichier de la pluralité de pages de fichier.

8. Système selon l'une quelconque des revendications précédentes, dans lequel :
l'unité de traitement de gestion (101) est en outre conçue pour sélectionner l'unité de traitement de destination (103) parmi une pluralité de possibles unités de traitement de destination selon un ensemble prédéfini de critères d'unité de traitement de destination.

9. Système selon l'une quelconque des revendications précédentes, dans lequel :
l'unité de traitement de gestion (101) est connectée à l'unité de traitement source (102) et à l'unité de traitement de destination (103) par l'intermédiaire d'un réseau de communication numérique (120).

10. Système selon l'une quelconque des revendications précédentes, dans lequel :
l'unité de traitement source (102) est connectée à l'unité de traitement de destination (103) par l'intermédiaire d'un autre réseau de communication numérique.

11. Système selon l'une quelconque des revendications précédentes, dans lequel :
l'unité de traitement de gestion (101) est en outre conçue pour donner l'instruction d'exécuter un objet logiciel agent sur l'unité de traitement source (102) et l'unité de traitement de destination (103) dans le but de communiquer avec l'unité de traitement de gestion (101) et de plus ou selon une variante, dans le but de copier le fichier d'objet logiciel de virtualisation.

12. Système selon l'une quelconque des revendications précédentes, dans lequel :
le fichier d'objet logiciel de virtualisation est un fichier d'image d'une machine virtuelle.

13. Système selon l'une quelconque des revendications précédentes, dans lequel :
l'unité de traitement source (102) et l'unité de traitement de destination (103) sont connectées à un réseau en nuage.

14. Procédé de copie d'un fichier d'objet logiciel de virtualisation, comprenant les étapes consistant à :
envoyer, à une unité de traitement de destination (103), une pluralité de pages de fichier du fichier d'objet logiciel de virtualisation en exécutant une pluralité d'itérations de transfert ; et
donner l'instruction (220) à l'unité de traitement de destination (103) de reconstruire l'objet logiciel de virtualisation au moyen de la pluralité de pages de fichier ;
dans chaque itération de transfert de la pluralité d'itérations de transfert, une page de fichier du fichier d'objet logiciel de virtualisation étant sélectionnée (213), un possible fichier source de page comprenant une page de fichier identique à la page de fichier sélectionnée étant identifié (215) dans un fichier d'objet logiciel de virtualisation source accessible par une unité de traitement source (111), et l'unité de traitement source (111) recevant l'instruction (217) d'envoyer la page de fichier identique à l'unité de traitement de destination (103), ce qui comprend l'étape consistant à :
identifier (201) une pluralité de fichiers sources d'objet logiciel de virtualisation ayant chacun au moins certaines pages de fichier identiques chacune à une page de fichier d'une pluralité de pages de fichier du fichier d'objet logiciel de virtualisation,
le procédé étant **caractérisé en ce que** chaque fichier source d'objet logiciel de virtualisation de la pluralité de fichiers sources d'objet logiciel de virtualisation est accessible par une possible unité de traitement source d'une pluralité de possibles unités de traitement sources (111, 111a, 111b) ;
recevoir (303), en provenance de la pluralité de possibles unités de traitement sources (111, 111a, 111b), une pluralité de messages comprenant chacun une valeur de charge d'un indicateur métrique de charge de ressource d'une possible unité de traitement source (111, 111a, 111b) respective ; et
identifier (316), dans chaque itération de transfert de la pluralité d'itérations de transfert, une unité de traitement source (111, 111a, 111b) préférée ayant une valeur de charge préférée selon un test de charge de ressource et ayant accès à un possible fichier source de page comprenant une page de fichier identique à la page de fichier ;
à l'étape consistant à donner l'instruction (217), l'unité de traitement source (111, 111a, 111b) préférée, en guise d'unité de traitement source (111), recevant l'instruction d'envoyer la page de fichier identique à l'unité de traitement de destination (103).

15. Produit de programme informatique, incluant un support de stockage lisible par ordinateur comportant des instructions de programme lisibles par ordinateur pour amener un processeur à réaliser le procédé selon la revendication 14.
